# EUROPEAN PATENT APPLICATION

(11) **EP 1 226 761 A1**
(43) Date of publication of application: **31.07.2002**
(21) Application number: 01101868.6
(22) Date of filing: 26.01.2001
(51) Int. Cl.: A23C 9/154

(54) **A milk product which can be foamed by shaking**

(71) Applicant: SOCIETE DES PRODUITS NESTLE S.A., 1800 Vevey (CH)
(72) Inventor: Groux, Michel John Arthur, 3438 Lauperswil (CH); Bisperink, Christiaan, 5373 AV Herpen (NL); Vaghela, Madansinh, 1814 La Tour-de-Peilz (CH)
(74) Representative: Thomas, Alain

(57) **Abstract**

The invention concerns a milk product containing from 0 to 30 % fat, from 5 to 23 % solid non fat, other ingredients and water, wherein said product can be foamed at room temperature either by shaking or with a foaming device, said product containing further a mixture of three emulsifiers and a foam stabilizer.

## Description

The present invention concerns a milk product which can be foamed by simple hand shaking.

It is already known on the market to have a milk product which can be foamed by simple shaking, for example for making a milk-shake. This milk product contains as functional ingredient for allowing such foaming a vegetable protein. The problem with this type of product is that the foaming is poor if the product is sterilised, the foam created is not stable and the product is not stable in hot coffee, that means it coagulates.

The object of the present invention is to develop a milk product, wherein it is possible, in any case, independently of the way of producing , to obtain a foaming by simple hand shaking. It is furthermore the object of the present invention to have a milk product, wherein no cooling of the product is needed prior to foaming, wherein the foam remains stable for a long time on cold and also on hot beverages and said product provides a good whitening power.

The present invention concerns a milk product containing from 0 to 30 % fat, from 5 to 23 % solid non fat, other ingredients and water, wherein said product can be foamed at room temperature either by shaking or with a foaming device, said product containing further a mixture of three emulsifiers and a foam stabilizer.

The concept of the invention is applicable to low fat products, but also to more fatty products. The fat content of the products can be totally or partially from animal origin, that means it is possible to have a totally milk fat or a mixture of milk fat and vegetable fat. As low fat products, we can consider partially defatted milk, evaporated milk, coffee cream : for these types of products, the milk solid non fat content can vary broadly, for example between 7 and 23 %. As more fatty products, we can consider dairy whippable creams and non dairy whippable creams. All the percentages given in the present specification are in weight, based on the final product.

The emulsifier mixture comprises three compounds capable of facilitating the formation and stabilization of the foam. These emulsifiers are polyglyceromonostearate (PGMS), sorbitantristearate (STS) and unsaturated monoglyceride. It is furthermore necessary to have in the milk product of the invention a foam stabilizer. This foam stabilizer is a compound comprising microcrystalline cellulose and carboxymethylcellulose.

The amount of microcrystalline cellulose (MCC) and carboxymethylcellulose (CMC) is comprised between 0.05 and 0.35 %. This compound is preferably sold under the Trade-Mark Avicel by FMC.

The amount of polyglyceromonostearate (PGMS) is comprised between 0.3 and 3 %.

The amount of sorbitantristearate (STS) is comprised between 0.005 and 0.15 %.

Finally, the amount of unsaturated monoglyceride is comprised between 0.005 and 0.15 %.

In the case of a milk product having an amount of fat of about 0 to 12 %, the amount of microcrystalline cellulose and carboxymethylcellulose is of about 0.22 %, the amount of polyglyceromonostearate is of about 0.9 %, the amount of sorbitantristearate is of about 0.015 % and the amount of unsaturated monoglyceride is of about 0.015 %.

In the case of a milk product having an amount of fat of about 30 %, the amount of microcrystalline cellulose and carboxymethylcellulose is of about 0.22 %, the amount of polyglyceromonostearate is of about 2.4 %, the amount of sorbitantristearate is of about 0.045 % and the amount of unsaturated monoglyceride is of about 0.045 %.

The milk product of the invention is either pasteurised, sterilised or UHT treated. The process for preparing the product of the invention consists of dissolving in the skimmed milk the three emulsifiers , eventually by heating, adding eventually cream to increase the fat content, adding the foam stabilizer, eventually dispersed in water, for obtaining a final mix. This final mix is then heated, homogenized, UHT treated and finally filled. It is possible to fill either in jars or in spray-cans. If the milk product of the invention is sterilised, it is also possible to carry out the filling in cans.

As already said before, the fat can be a dairy fat, a non dairy fat or a mixture of both. When the fat is a dairy fat, it may be for instance, any milk fat source, such as butter oil, butter, real cream, or a mixture thereof. When the fat is a non-dairy fat, it may be, for instance, an edible oil or fat, preferably a vegetable oil, such as coconut oil, palm kernel oil, palm oil, cotton oil, peanut oil, olive oil, soy oil or a mixture thereof.

The other ingredients in the milk product are taken from the group consisting of carbohydrates, mineral salts, colorants, flavorings. The carbohydrates can be sugar, such as sucrose, glucose, fructose, lactose, dextrose, invert sugar either crystalline or liquid syrup form, or mixtures thereof.

The invention will now be further explained by the following examples.

### Comparative Example 1

To 62.5 kg of warm skim milk, 600 g of PGMS, 30 g of STS and 50 g of unsaturated monoglyceride are added and well dispersed. To the mix, 2 kg of hydroxypropyl ether of potato starch is added. The 29.5 kg of dairy cream are mixed and the final emulsion completed to 100 kg with water. The milk product has a fat content of 10.6 %.

The final mix is then preheated, homogenised, UHT treated, cooled, homogenised again, cooled and filled into glass bottles with head space and sterilised.

As a comparison, another milk product is prepared where the starch is replaced by a compound from microcrystalline cellulose and carboxymethylcellulose product sold by FMC under the trade mark Avicel) at 0.22 % instead of 2 % for the starch.

The main difference between the two products is that the product with the starch has a totally unstable foam and the product with the MCC-CMC has a much more stable foam.

### Example 2

To 62.5 kg of warm skim milk, 900 g of PGMS, 15 g of STS and 15 g of unsaturated monoglyceride are added and well dispersed. To that mix, 29.5 kg of dairy cream are added and finally 220 g of a compound from microcrystalline cellulose (MCC) and carboxymethylcellulose (CMC) from FMC are added.

The final mix is heated, homogenised, UHT treated, cooled, homogenised again, cooled and stored. The fat content is of 11.5 % and the solid non fat of 19 %. The product is filled in glass jars with a head space and the jars are sterilised.

The product obtained, shaken vigorously by hand, foams very well without being previously chilled. Poured on hot coffee into a cup, the product forms a thick foam layer of about 1 cm height, which remains stable for at least 10 min. Part of the product disperses into the coffee, whitening it as would do any coffee creamer, without showing any flocculation. On storage, the product remains stable for months without any visible sign of physical instability.

It is possible with the product of the invention to reach an overrun of about 300 % (reached by using whipping tools) and the foam obtained remained stable for more than 2 h at room temperature.
The product of the invention filled in a spray can was very well foamable and stable on hot coffee. The foam height obtained was of several centimeters in a cup of coffee, permitting the preparation of a "Café Viennois". The same foam, being quite stable, can easily be used as a low fat mousse comparable to a whipped dairy cream, for example to garnish fruits and cakes.

### Example 3

The only difference with the example 2 is that the milk fat has been replaced by a vegetable fat, all additives remaining in the same proportion as in said preceding example. The overall process as described was kept the same.

The results of foaming by shaking vigorously by hand at room temperature showed an improvement over the formulation of example 2.

### Example 4

The same basic recipe as in example 2 was repeated, that is the fat content is of 10.6 % and the solid non fat of 7.3 %.
With a PGMS content comprised between 0.3 and 0.9 %, there is an improvement in the foaming properties. In the case of STS and unsaturated monoglyceride, a content of about 0.01 % gives a product with a finer foam and more stable on hot coffee.

### Example 5

To a skimmed milk having a fat content of about 0.05 to 2 %, 0.9 % PGMS, 0.015 % STS, 0.015 % unsaturated monoglyceride and 0.22 % of a compound from microcrystalline cellulose and carboxymethylcellulose from FMC were added.

The product was processed as in example 2. As a result, the product was foamable at room temperature, although the stability of the foam was slightly poorer than the product from example 2.

### Example 6

A dairy cream having a fat content of 30 % was prepared by adding 2.4 % PGMS, 0.045 % STS, 0.045 % unsaturated monoglyceride and 0.22 % of a compound from microcrystalline cellulose and carboxymethylcellulose from FMC. The process for the preparation is the same as in example 2.

The foamability at room temperature was poorer than the same product without additives whipped mechanically.

## Claims

1. A milk product containing from 0 to 30 % fat, from 5 to 23 % solid non fat, other ingredients and water, wherein said product can be foamed at room temperature either by shaking or with a foaming device, said product containing further a mixture of three emulsifiers and a foam stabilizer.

2. A milk product according to claim 1, wherein the emulsifiers are polyglyceromonostearate, sorbitantristearate and unsaturated monoglyceride and the foam stabilizer is a compound comprising microcrystalline cellulose and carboxymethylcellulose.

3. A milk product according to any of claims 1 or 2, wherein the amount of microcrystalline cellulose and carboxymethylcellulose is comprised between 0.05 and 0.35 %.

4. A milk product according to any of claims 1 to 3, wherein the amount of polyglyceromonostearate is comprised between 0.3 and 3 %.

5. A milk product according to any of claims 1 to 4, wherein the amount of sorbitantristearate is comprised between 0.005 and 0.15 %.

6. A milk product according to any of claims 1 to 5, wherein the amount of unsaturated monoglyceride is comprised between 0.005 and 0.15 %.

7. A milk product according to any of claims 1 to 6, wherein the amount of fat is of about 0 to 12 % and the amount of microcrystalline cellulose and carboxymethylcellulose is of about 0.22 %, the amount of polyglyceromonostearate is of about 0.9 %, the amount of sorbitantristearate is of about 0.015 % and the amount of unsaturated monoglyceride is of about 0.015 %.

8. A milk product according to any of claims 1 to 6, wherein the amount of fat is of about 30 % and the amount of microcrystalline cellulose and carboxymethylcellulose is of about 0.22 %, the amount of polyglyceromonostearate is of about 2.4 %, the amount of sorbitantristearate is of about 0.045 % and the amount of unsaturated monoglyceride is of about 0.045 %.

9. A milk product according to any of claims 1 to 7, wherein said product is sterilised or UHT-treated.

10. A milk product according to any of claims 1 to 8, wherein the fat is a dairy fat, a non-dairy fat or a mixture of both.

11. A milk product according to any of claims 1 to 9, wherein the other ingredients are taken from the group consisting of carbohydrates, mineral salts, colorants, flavorings.
